# EUROPÄISCHE PATENTANMELDUNG

(11) **EP 3 514 513 A1**
(43) Veröffentlichungstag der Anmeldung: **24.07.2019**
(21) Anmeldenummer: 18000054.9
(22) Anmeldetag: 23.01.2018
(51) Int. Cl.: G01J 3/02, G01J 3/44, G02B 21/24, G01B 9/02, G02B 21/02

(54) **AUTOMATISCHES FOKUSSIERSYSTEM FÜR RAMAN-SPEKTROMIKROSKOPE**

(71) Anmelder: Universitatea Stefan cel Mare Suceava - Romania, 720229 Suceava (RO)
(72) Erfinder: Gutt, Gheorghe, 720229 Suceava (RO); Popa, Valentin, 720229 Suceava (RO); Dimian, Mihai, 720229 Suceava (RO)

(57) **Zusammenfassung**

Die Erfindung betrifft ein Raman-Spektromikroskop ausgestattet mit einem optisch aktiven Fokussiersystem, das an selber Stelle und in selber Zeit, sowohl mikroskopische als auch Ramanspektroskopische Studien auf einer untersuchten festen oder halbfesten Materie (1), unter hoher mikroskopischer Auflösung als auch unter hoher spektroskopischer Auflösung, ermöglicht. Der spektromikroskopische Aufbau umfasst ein optisches Objektiv (A) gemäß der Erfindung, ein Brennpunktverschiebungskontrollsystem (B), einen optischen Tubus (C), eine polychromatische Strahlungsquelle (D), eine monochromatische Strahlungsquelle (E), ein Ramanspektroskop (F), ein Bildgebungs- und Bildspeicherungssystem (G), einen Computer (H) und eine spezifische Anwendungssoftware (I). Zur Kalibrierung der aktiven Optik des Fokussiersystems wird eine interferometrische Michelson-Einrichtung verwendet.

## Beschreibung

Die vorliegende Erfindung betrifft ein automatisches Fokussierungssystem, das gleichzeitig sowohl mikroskopische Untersuchungen, im sichtbaren Spektralbereich, als auch qualitative und quantitative spektroskopischen Raman Analysen, im spektralen Infrarotbereich , bei einer Wellenlänge des Laserstrahles von 1024 nm, an fester oder halbfester Materie ermöglicht. Die Erfindung kann industriell in einem Raman-Spektromikroskop mit einer hohen optischen und spektralen Auflösung verwirklicht werden. Das System kann aber auch auf Raman-Spektromikroskopen die sich derzeit in der Produktion befinden sowie auch auf schon gebaute Raman-Spektromikroskope eingesetzt werden. Darüber hinaus ermöglicht die modulare Struktur des Systems die Umwandlung von optischen Mikroskopen und unabhängigen Raman-Spektroskopen in Raman-Spektromikroskope.

Die Spektromikroskopie bildet ein modernes Forschungsmittel, das in Form einer einheitlichen Struktur ein Spektroskop und ein Mikroskop vereint. Die Spektromikroskopie bietet den großen Vorteil, dass man feste oder halbfeste Materie genau an derselben Stelle und gleichzeitig sowohl mikroskopisch als auch spektral untersuchen kann. Gegenwärtig gibt es Spektromikroskope im sichtbaren Spektralbereich, Infrarot-Spektromikroskope und Raman - Spektromikroskope im infraroten Spektralbereich, wobei letztere oft unkorrekt als Raman- Mikroskope bezeichnet werden. Sowohl die mikroskopische Untersuchung als auch die Raman-Spektralanalyse erreichen die höchste Auflösung, wenn die untersuchte Materie sich im Brennpunkt der Strahlung befindet. Bei der Mikroskopie sind Bilder ausserhalb des Brennpunktes unscharf, bei der Raman Spektroskopie führt die Arbeit außerhalb des Brennpunktes zu einer verringerten Selektivität, Präzision und Empfindlichkeit, was sich für die Letztere negativ auf die Nachweisgrenze bei der Spurenanalyse auswirkt.

Bei der mikroskopischen Untersuchung der Materie wird im sichtbaren Spektralbereich die maximale optische Auflösung als der minimale Abstand definiert bei dem zwei Punkte in einem mikroskopischen Bild, der zu untersuchenden Materie, klar unterschieden werden können. In der spektroskopischen Analyse wird die Auflösung als das Verhältnis λ/δλ definiert, wobei δλ die kleinste Wellenlängendifferenz die zwei Spektrallinien, die von einem Spektroskop angezeigt werden, aufweisen und λ der Mittelwert der Wellenlängen der beiden Spektrallinien ist

Gegenwärtig werden drei Arten von Raman-Spektromikroskopen verwendet. Eines hat die Wellenlänge des Laseranregungsstrahles 532 nm, im sichtbaren Spektralbereich, das zweite hat den Wert der Wellenlänge des Laseranregungsstrahles 785 nm, an der Grenze des Spektralbereichs sichtbar-infraroten Spektralbereich, und das dritte arbeitet im Infraroten Spektralbereich und hat hat den Wert der Wellenlänge des Laseranregungsstrahles 1064 nm. Der letzte Raman-Spektromikroskop Typ erfährt eine wachsende Entwicklung, in erster Linie aufgrund der hohen Laserenergiedichte die es erlaubt auch gewisse chemische Spezies zu analysieren die durch einen Laserstrahl aus dem spektralen sichtbaren Bereich nicht angeregt werden können, und in zweiter Linie durch die Tatsache dass die spektralen Interferenzen bei kleinen Wellenlängen des Laseranregungsstrahles größer sind als bei großen Wellenlängen. Bei einem Raman Spektromikroskop mit der Wellenlänge der Laserstrahlung von 532 nm oder 785 nm, wird der Arbeitstisch mit der festen oder der halbfesten zu untersuchenden Materie manuell oder motorisch auf und runter bewegt bis in den Okularen oder auf dem Bildschirm ein klares Bild erscheint. Dieses entspricht der Tatsache das sich die untersuchte Materie für die mikroskopische Studie in einem optischen Brennpunkt befindet, das Ergebnis ist ein mikroskopisches Bild das gespeichert wird. Nach der Speicherung des mikroskopischen Bildes wird der Laser eingeschaltet dessen monochromatische Strahlung die Anregung der untersuchten Materie im selben Brennpunkt bei dem die Bildgebung und Bildspeicherung erfolgte, bewirkt. Das Ergebnis ist ein Fluoreszenz-Raman-Spektrogramm, dass über die Stokes Spektrallinien Informationen über die in der untersuchten Materie vorhandenen chemischen Spezies sowie über derer Konzentrationen liefert. Diese Art von Raman Spektromikroskopen verwendet optisch korrigierte Apochromat oder Planapochromat Objektive die einen Wellenlängenbereich zwischen 390 nm (violett) und 780 nm (rot) decken und alle Wellenlängen aus diesem Bereich in einen einzigen Brennpunkt konzentrieren der bei circa 580 nm (nach dem Linsenhersteller) im gelbgrünen Spektralbereich liegt. Bei diesen Ramanspektroskopen stellt man fest dass der gefundene Brennpunktwert nicht den beiden Brennpunktwerten der verwendeten Laserwellenlängen entspricht dass einen negativen Effekt auf die Spektrale Auflösung und auf die spektrale Wiederholbarkeit hat.

Bei einem Raman Spektromikroskop mit der Wellenlänge der Laserstrahlung 1064 nm ist die Fokussierung nicht so leicht zu erzielen wie bei den Spektromikroskopen mit der Laserstrahlung im sichtbaren Spektralbereich da auf dem Bildschirm kein Mikroskopbild zu sehen ist, es sind lediglich nur die Stokes und Anti Stokes Spektralinien sichtbar.

Zwecks Durchführung der mikroskopische Studie bei dieser Art von Raman - Spektromikroskopen wird zurzeit im ersten Teil wie im vorherigen Fall, mit den spezifischen Wellenlänge der Laserstrahlung von 532 nm und 785 nm, vorgegangen. Abschließenden werden auch bei diesem Raman-Spektromikroskop eine große Anzahl Mikroskopiebilder gespeichert. Im zweiten Teil, um die spektroskopische Raman Analyse durchzuführen, wird der Laser eingeschaltet und wiederholt manuell oder motorisiert der Arbeitstisch mit der zu untersuchenden festen oder halbfesten Materie in vertikalen Richtung bewegt und zugleich auf dem Bildschirm der Moment verfolgt in dem die spektralen Stokes oder Anti Stokes Linien eine maximale Höhe aufweisen ein Beweis dass sich die untersuchte Materie im Brennpunkt des Laserstrahles befindet.
Dieses System und seine Arbeitsweise weisen Nachteile für Raman - Spektromikroskope mit einer Anregungswellenlänge von 1064 nm auf weil die untersuchte Materie den realen Brennpunkt mehrere Male durchquert bis die Entscheidung über die Position, welche die beste spektrale Auflösung bietet, gefällt wird. Die wiederholten Suchvorgänge des Brennpunkts führen aufgrund der hohen thermischen Laser Energiedichte im Brennpunkt dazu, dass sich die chemische Zusammensetzung der untersuchten Materie ändert und sogar die Möglichkeit besteht dass deren Komponenten zersetzt werden. Anderseits bietet ein visuell festgelegter Brennpunkt keine gute Reproduzierbarkeit von Probe zu Probe dass sich negativ auf die Genauigkeit, die Selektivität und die Empfindlichkeit der Raman Spektralanalyse auswirkt.

Zwecks einer schnellen und präzisen automatischen optischen Fokussierung bei Auflichtmikroskopen im sichtbaren Spektralbereich ist den Autoren die Lösung aus dem eigenen Dokument D1 : "Mikroskopobjektiv mit automatischer Fokussierung" Akte OSIM A00661/2017.09.15 bekannt. Das Mikroskopobjektiv laut der beschriebenen Erfindung verwendet eine adaptive Optik gebildet aus einem piezoelektrischen Quarz Stellantrieb der einen konkaven oder einen konvexen metallischen Fokussierspiegel gegen und von dem zu untersuchendem Material bewegt. Die Kontrolle des Wertes der Bewegung wird durch einen kapazitiven Sensor erreicht. Ein Optisches Auflichtmikroskop das ein Objektiv dieser Art verwendet besteht aus einem optischen Tubus, einem Trinokular, einem optoelektronisches Abbildungs- und Bildgebungssystem, einem Brennpunktlichtintensitätsmesssystem, einer Differenzialfokuspunktsucheinheit, einer Sollwert - und Schrittspannungseinheit, einer kapazitiven Verschiebungssteuereinheit, einem Computer und einer entsprechender Software. Der Nachteil der Lösung besteht in der Notwendigkeit eines Wegaufnehmers und der Verwendung von nur einem Fokuspunktsuchsystems welches auf den maximalen Fotostrom, entsprechend der von der untersuchten Materie reflektierte Lichtstrahlung, basiert. Dieses Suchsystem ist zwar sehr präzise aber nicht so schnell wie ein Phasenvergleichssystem

Eine bekannte und angewandte Lösung zum Fokussieren eines Laserstrahls im infraroten Spektralbereich wird beim Laserschneiden von Metallen angewandt, wobei zum automatischen Fokussieren ein metallischer Kupferspiegel mit Doppelwänden verwendet wird in dessen Hohlräumen destilliertes Wasser unter Druck eingeführt wird. Eine Regelschleife verändert den Wasserdruck der seinerseits die Spiegelkonkavität so modifiziert dass der Brennpunkt, der die maximale Schneideffizienz garantiert, bis zur Tiefe des noch ungeschnittenen Metallmaterials vordringt. Der Sensor in der automatischen Laserbrennpunktjustierschleife ist ein elektronisches Pyrometer, dass die Metalltemperatur im Brennpunktbereich misst. Aus Gründen der Dimension, der Präzision und der Reaktionsgeschwindigkeit ist diese Lösung nicht in Raman-Spektromikroskope anwendbar.

Das durch die Erfindung gelöste technische Problem besteht in einer adaptiven Optik, die bei Raman-Spektromikroskopen mit monochromatischer Laser Anregungsstrahlung mit einer Wellenlänge von 1064 nm verwendet wird und eine hohe mikroskopische und spektrale Auflösung sowohl für das mikroskopische Studium der untersuchten Materie als auch für deren spektroskopische Raman Analyse sichert.

Eine hohe mikroskopische und spektrale Auflösung bei Raman-Spektromikroskopen kann nur durch die Brennpunktsuche mit hoher Geschwindigkeit sowohl für die polychromatische Strahlung im sichtbaren Spektralbereich als auch für die monochromatische Lasererregungsstrahlung im infraroten Spektralbereich erreicht werden. Die Lösungen aus der vorliegenden Erfindung werden Raman Spektromikroskopen angewandt derer Wellenlänge der monochromatischen Laserstrahlung bei 1064 nm liegt und die eine adaptive Optik mit Autofokusobjektiven besitzen.

Bei jeder Fokussierung der Lichtstrahlung entlang der Fokuslinie im sichtbaren Spektralbereich erfolgt für jeden erreichten Brennpunkt eine mikroskopie Bildgebung und deren Speicherung. Nach der Brennpunktsuche im sichbaren Bereich folgt innerhalb von Millisekunden im infrarot Spektralbereich die Brennpunktsuche der monochromatischen Laserstrahlung mit der Wellenlänge 1064 nm. Das Ergebnis der vollständigen spektromikroskopischen Analyse ist für die Mikroskopie ein 3D-Bild mit hoher Auflösung und für die Ramanspektroskopie ein hochauflösendes Spektrogramm. Gemäß der Erfindung wird für die Brennpunktsuche im sichtbaren und im Infrarotbereich adaptive Optik verwendet. Hauptteil dieser Optik ist ein Autofokusobjektiv mit chromatisch unkorrigiertren Linsen und ein piezoelektrischer Stellantrieb der fast trägheitslos, ohne Reibung und mit hoher Geschwindigkeit eine Fokussierlinse des optischen Objektivs entlang der Fokusbrennpunktlinie, auf einem Wellenlängenbereich von cca 800 nm, alternativ gegen und von der untersuchten festen oder halbfesten Materie auf kleinen Distanzen bewegt. Es werden somit alle Wellenlängenwerte des spektralen sichtbaren Bereiches durch Brennpunkte, und denen entsprechende Mikroskopiebilder, gedeckt. Mit demselben Autofokusobjektiv wird der Brennpunkt der monochromatische Strahlung bei der Wellenlänge von 1064 nm im infraroten Spektralbereich in Verbindung mit automatischer Ramanspektroskopie gesucht und dementsprechend das Ramanspektrum erfasst, gespeichert, und mithilfe der Software analysiert. Die Kalibrierung der inkrementalen Bewegungen des Stellantriebes erfolgt einmalig vom Hersteller mithilfe eines Michelson-Interferometers. Die Optoelektronik welche aktiv das Autofokusobjektiv unterstützt besteht aus einem CCD- Bildgebungssensor einen CCD-Sensor für die dynamische Analyse der Intensität der von der untersuchten festen oder halbfesten Materie reflektierten Lichtstrahlung, ein Diodenarray für spektrale Bildgebung, und zwei andere Diodenarrays für Durchführung des Phasenvergleichs.

Die Suche und die automatische Einstellung des Brennpunktes in dem sichtbaren Spektralbereich erfolgt dual durch zwei Techniken, eine basiert auf den Phasenvergleich zwischen der Frequenz des einfallenden Lichtstrahls und der Frequenz des von der Materie reflektierten Lichtstrahls die andere auf die Suche der maximal von der untersuchten Materie reflektierten Lichtintensität. Auf diese Weise ist es möglich bei den Mikroskopiestudien die Vorteile beider Techniken zu verwenden, entsprechend: hohe Arbeitsgeschwindigkeit und Erkennung der Bewegungsrichtung der Fokussierungslinse in der Suche eines gewissen Brennpunktes bei der Technik basierend auf den Phasenvergleich und hohe Präzision bei der Techniken basierend auf die Analyse der maximal von der untersuchten Materie reflektierten Lichtintensität

Die Suche und die automatische Einstellung des Brennpunktes im Infraroten Spektralbereich , bei der Wellenlänge von 1064 nm, erfolgt durch die Technik der dynamischen Analyse der Intensität der von der untersuchten Materie reflektierten Lichtstrahlung. Wenn die Lichtstrahlung maximale Intensität aufweist befindet sich die Materie im Brennpunkt dieses gibt die höchste spektrale Auflösung und entsprechend wird das Ramanspektrum aufgenommen und gespeichert

Der Vorteil der Erfindung besteht in der Verwendung von chromatisch unkorrigierten preiswerten Fokuslinsen und einer speziellen aktiven Optik, die durch Erzeugung einer großen Anzahl von mikroskopie Bildern, entlang der Fokuslinie im sichtbaren Spektralbereich, eine hohe optische Auflösung bei Untersuchung von fester oder halbfester Materie gewährleistet. Durch Verwendung derselben aktiven Optik bei der Brennpunktsuche der Laserstrahlung im infraroten Spektralbereich gelingt es den Brennpunkt der Wellenlänge 1064 nm genau auf die Oberfläche der untersuchte Materie zu bringen und bietet somit die Garantie für eine hohe Auflösung des Ramanspektrums.

Folgend wird eine Ausführungsform der Erfindung unter Bezugnahme auf Fig. 1, Fig.2, Fig.3 Fig. 4 und Fig. 5 beschrieben:

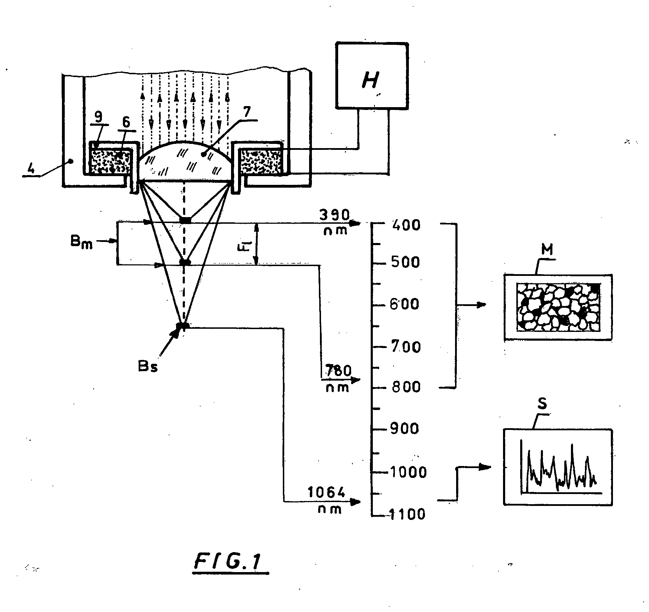

- Fig.1-: Schematische Darstellung bezüglich der Brennpunktsuche polychromatischer sichtbarer Lichtstrahlung im Wellenlängenbereich 390nm - 780 nm und monochromatischer Laser-Strahlung mit einer Wellenlänge von 1064 nm

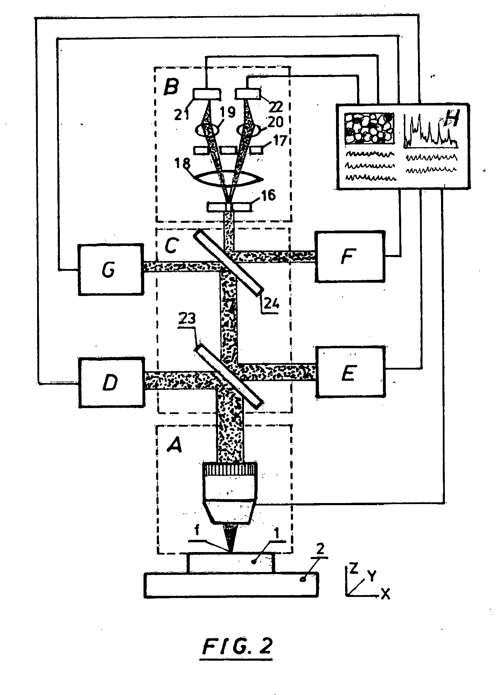

- Fig.2-: Optisches Schema des Raman-Spektromikroskopes mit aktiver Optik gemäß der Erfindung

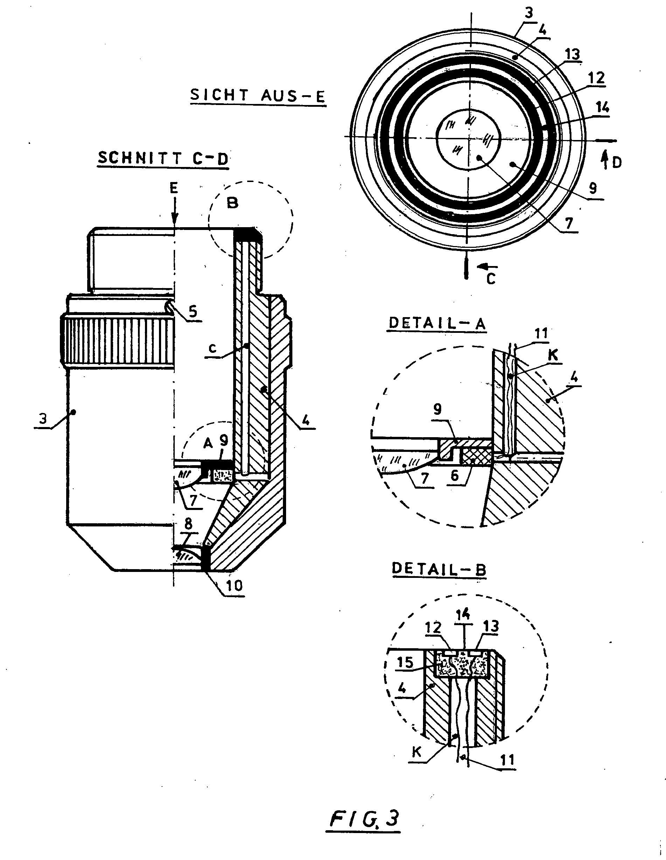

- Fig.3-: Ansicht und Schnitt durch eines Autofokusobjektivs ausgestattet mit einem piezoelektrischen Stellantrieb

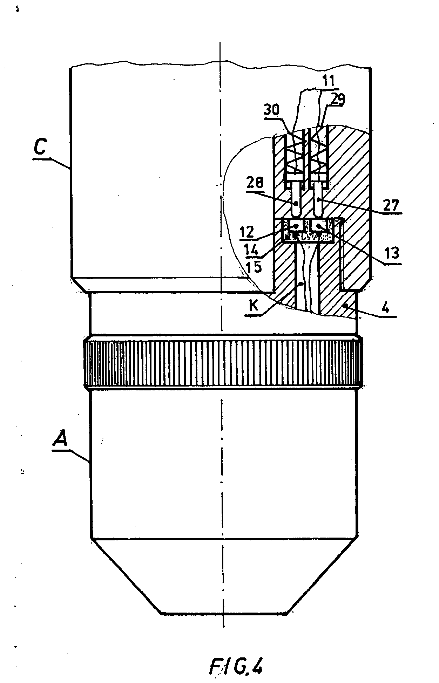

- Fig.4-: Ansicht des Autofokusobjektivs montiert auf den optischen Tubus de Raman-Spektromikroskops

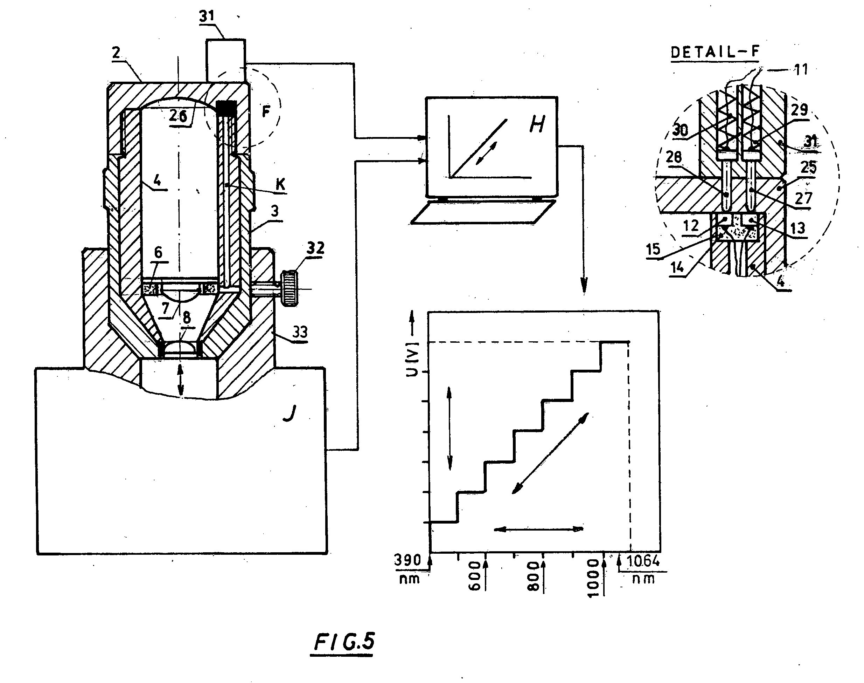

- Fig.5-: Vorrichtung mit einem Michelson-Interferometer verwendet zur Kalibrierung des Bewegunginkrementes bei der Suche eines bestimmten Brennpunktes auf der Fokusbrennpunktlinie des sichtbaren Spektralbereiches

Laut Erfindung verwendet das automatische Fokussiersystem für mikroskopische Auflichtuntersuchungen im sichbaren Spektralbereich und für Raman-Spektralanalysen bei der Wellenlänge von 1064 nm fester und halbfester Materie (1) gelegen auf einem vertikal bewegbarem Arbeitstisch (2) ein Objektiv (A) mit aktiver Optik, ein Brennpunktverschiebungskontrollsystem (B), einen optischen Tubus (C), eine polychromatische Strahlungsquelle (D), eine monochromatische Laserstrahlungsquelle (E), ein Ramanspektrometer (F), ein Bildgebungs- und Bildspeicherungssystem (G), einen Computer (H), eine spezifische Anwendungssoftware (I) und eine interferometrische Michelson Kalibriervorrichtung (J).

Das Objektiv (A) mit aktiver Optik besteht aus einem metallischen Oberkörper (3) einem metallischen Unterkörper (4), einer versenkten Schraube (5), einem piezoelektrischen Stellantrieb (6) zwei chromatisch unkorrigierte Fokussierlinsen (7)und(8), zwei metallische Zentrier- und Fixierbuchsen (9)und(10), einem Kanal (K) für die Lagerung eines elektrischen Stromversorgungskabels (11), zwei Kupferringe (12)und(13), die entweder zur internen elektrischen Verbindung zwischen dem Objektiv (A) mit aktiver Optik und dem optischen Tubus (C) oder zur internen elektrischen Verbindung zwischen dem Objektiv (A) und der Gewindekappe (25) dienen und ihrerseits undemontierbar in einer kreisförmigen Vertiefung (14) mittels eines Epoxidharzes (15) geklebt sind. Das Brennpunktverschiebungskontrollsystem (B) besteht aus zwei optischen Schlitzblenden (16)und(17), drei optischen Linsen (18),(19)und(20) und zwei Diode-Array Detektoren (21)und(22). Der optische Tubus (C) beinhaltet zwei halbtransparente Spiegel (23)und(24). Das interferometrische Kalibriersystem des inkrementalen Bewegungswertes des piezoelektrischen Stellantriebes (6), zwecks Suche verschiedener Brennpunkte (Bₘ) auf der Fokusbrennpunktlinie (Fₗ), besteht aus einem Michelson-Interferometer (J), einer Kappe (25) mit Innengewinde und einem konkaven Metallspiegel (26), zwei Kontaktstifte aus Silber- Kupferlegierung (27)und(28), zwei Druckfedern (29)und(30), einer Befestigungsschraube (32), einem elektrischen Verbindungselement (31) zwischen dem Objektiv (A) und der Optoelektronik des Ramanspektroskops und einem mechanischen Verbindungskörper (33) zwischen dem Objektiv (A) und der interferometrischen Michelson Kalibriervorrichtung . Das Resultat der Verwendung des beschriebenen Raman-Spektromikroskopes ist ein Mikroskopbild (M) und ein Raman-Spektrogram (S), beide mit hoher optischer Auflösung.

Die Arbeitsweise mit dem Spektromikroskop besteht in einer in drei aufeinanderfolgenden Etappen nach der Suche der Brennpunkte (Bₘ) aus dem sichtbaren Spektralbereiche und des Brennpunktes (Bₛ), gelegen im infraroten Spektralbereich. Die ersten zwei Etappen entsprechen dem Spektralbereich 390 nm -780 nm und sind der optischen Mikroskopie spezifisch. Die dritte Etappe entspricht der Brennpunktsuche bei der Wellenlänge 1064 nm und ist der Ramanspektroskopie im Infrarotbereich spezifisch.

In der ersten Etappe wird der Arbeitstisch (2) mit der untersuchten festen oder halbfesten Materie (1), mit einem elektrischen Stellantrieb automatisch auf und abwärts bewegt, bis sich diese im ersten Brennpunkt (Bₘ₁) befindet der sich auf der optischen Fokusbrennpunktlinie (Fₗ) auf der weitesten Position entfernt von der letzten Fokussierlinse des Objektivs (A) befindet und der Wellenlänge 780 nm entspricht deren Wert an der Grenze zwischen dem sichtbaren und dem infraroten Spektrum liegt. Das Erreichen dieses Brennpunktes wird von der spezifischen Anwendungssoftware (I) überwacht welche diesbezüglich die Technik der Messung der maximal von der untersuchten Materie (1) reflektierten Lichtintensität verwendet.

In der zweiten Etappe wird die automatische Brennpunktsuche durch den piezoelektrischen Stellantrieb (6) und der entsprechenden Software durchgeführt . Nachdem der Brennpunkt (Bₘ₁) im roten Spektralbereich, entsprechend der ersten Etappe erreicht ist, wird die Brennpunktsuche automatisch mit kleinen Inkrementen der Wellenlängenwerte auf der Fokusbrennpunktlinie (Fₗ) im spektralen sichtbaren Bereiches fortgesetzt indem die Fokussierlinse (7) durch den piezoelektrischen Stellantrieb (6) entlang der Fokusbrennpunktlinie (Fₗ) des sichtbaren Spektralbereichs mit kleinen Wellenlängenschritten bewegt wird. Die Feststellung dass ein Brennpunkt einer gewissen Wellenlänge entspricht wird durch die schon beschriebene duale Verfolgungstehnik gemacht die sowohl den Phasenvergleich als auch die maximale reflektierte Lichtintensität zur Validierung des Brennpunktes in Betracht zieht. Bei Raman- Spektromikroskopen mit Fourier Transformierten wird die maximale reflektierte Lichtintensität, gegeben durch die beiden Sensoren des Interferometers, zur Validierung des Brennpunktes in Betracht genommen. Das Ergebnis der Brennpunktsuche auf der Fokusbrennpunktlinie (Fₗ) ergibt hunderte von mikroskopie Bildern die mithilfe der Software entweder unter der Form eines 3D Tomogramms, unter der Form einzelner Bilder, oder als ein Film, gespeichert und angezeigt werden.

In der dritten Etappe wird die Suche nach dem Brennpunkt (Bₛ) der monochromatischen Laserstrahlung bei der Wellenlänge von 1064 nm durchgeführt . Zu diesem Zweck verwendet die Software die Technik der dynamischen Analyse der Intensität der von der untersuchten Materie (1) reflektierten Lichtstrahlung. Wenn die Lichtstrahlung maximale Intensität aufweist befindet sich die Materie (1) im Brennpunkt (Bₛ) dieses gibt die höchste spektrale Auflösung und entsprechend wird das Ramanspektrum (S) aufgenommen und gespeichert

## Patentansprüche

1. Die Erfindung Automatisches Fokussiersystem für Raman-Spektromikroskope zu dessen Bau ein piezoelektrischer Stellantrieb, ein Phasenvergleichssystem und ein Lichtintensitätvergkleichsystem gehöhrt **dadurch gekennzeichnet dass** zur automatischen Suche der Brennpunkte (Bₘ) gelegen auf der Fokusbrennpunktlinie (Fₗ) im sichtbaren Spektralbereich der Auflichtmikroskopie und zur automatischen Suche des Brennpunktes (Bₛ) gelegen im infraroten Spektralbereich und spezifisch der Ramanspektroskopie bei der Wellenlänge von 1064 nm, unter Sicherung einer hohen optischen Auflösung, ein Objektiv (A) mit adaptiver Optik und einer entsprechender Optoelektronik verwendet wird wobei die Mikroskopie, sowohl der Phasenvergleich als auch den Lichtintensitätvergleich in einer Regelschleife kombiniert und die Ramananalyse nur die Regelschleife für Lichtintensitätvergleich verwendet.

2. Objektiv (A) mit adaptiver Optik, nach Anspruch 1, **dadurch gekennzeichnet dass** zur Erzeugung von mikroskopie Bildern mit hoher Auflösung die Linsen (7) und (8) des Objektivs obligatorisch aus optischem chromatisch nicht korrigiertem Glas bestehen und entsprechend für den sichtbaren Spektralbereich eine Fokusbrennpunktlinie (Fₗ) aufweisen die es ermöglicht alle Wellenlängen zwischen 390 nm und 780 nm durch einen piezoelektrischen Stellantrieb (6), eine entsprechende Optoelektronik und die zugehörige Software (I) alle im sichtbaren Spektralbereich der Mikroskopie gelegenen Brennpunkte (Bₘ) anzufahren, wobei das Resultat eine 3D- mikroskopie Aufnahme der untersuchten festen oder halbfesten Materie (1) ist.

3. Objektiv (A) mit adaptiver Optik nach Anspruch 1 und Anspruch 2, **dadurch gekennzeichnet, dass** zur automatischen aktiven Suche der Brennpunkte (Bₘ) gelegen auf Fokusbrennpunktlinie (Fₗ) und zur automatischen Suche des Brennpunktes (Bₛ) gelegen im infraroten Spektralbereich, die chromatisch unkorrigierte Linse (7) zentrisch auf dem piezoelektrischen Stellantrieb (6) geklebt ist der seinerseits auf der metallischen Zentrier- und Fixierbuchse (9) angebracht ist.

4. Objektiv (A) mit adaptiver Optik nach Anspruch 1, Anspruch 2 und Anspruch 3, **dadurch gekennzeichnet dass** zur Erregung des piezoelektrischen Stellantriebes (6) eine Computer (H), ein elektrischer Stromversorgungsleiter (11), zwei Ringe (12)und(13), zwei zylindrischen Stifte (27) und (28) und zwei Druckfedern (29)und (30) verwendet werden

5. Objektiv (A) mit adaptiver Optik nach Anspruch 4, **dadurch gekennzeichnet dass** zur verlustfreien Übertragung der elektrischen Signale die Ringe (12) und (13) aus Kupfer und die zylindrischen Stifte (27) und (28) aus einer Silber-Kupfer-Legierung sind .

6. Objektiv (A) mit adaptiver Optik nach Anspruch 1 und Anspruch 3, **dadurch gekennzeichnet dass**, zum Erreichen einer dauerhaften, gleichmäßigen, trägheitslosen und reibungsfreien aktiven Optik das Verbinden des piezoelektrischen Stellantriebes (6) mit der metallischen Zentrier- und Fixierbuchse (9) und der Letzteren mit dem oberen Objektivkörper (4) sowie zur dauerhaften Fixierung und Verklebung der Kupferringe (12)und (13) in der ringförmigen Veriefung (14) ein Epoxid Harz (15) verwendet wird das zugleich auch die Rolle eines guten elektrischen Isolators erfüllt.

7. Regelschleife, nach Anspruch 1, **dadurch gekennzeichnet dass** bei einer mikroskopischen Untersuchung die Erfassung und Speicherung des Bildes nur dann erfolgt, wenn der Fokuspunkt einer bestimmten Wellenlänge erreicht ist, und um diese Bedingung zu erfüllen zugleich mit dem Phasenvergleich zwischen der Frequenz der einfallenden Lichtstrahlung und der Frequenz des von der festen oder der halbfesten Materie (1), reflektierten Lichtstrahlung auch die dynamische Messung der Intensität des reflektierten Lichtes, durchgeführt wird.

8. Regelschleife, nach Anspruch 1 und Anspruch, 7 mit einer dualen optoelektronischen Struktur basierend auf Phasenvergleich und dynamischer Lichtintensitätsanalyse im sichtbaren Spektralbereich **dadurch gekennzeichnet dass** zur Sicherung höchster optischer und spektroskopischer Auflösung während der Bewegung der Fokussierlinse (7) durch den piezoelektrischen Stellantrieb (6) das Fokussiersystem automatisch mit hoher Geschwindigkeit zwischen dem Phasenvergleich und dem dynamischen Lichtintensitätsvergleich schaltet, die Entscheidung wessen Wert der dualen Struktur zur Bildaufnahme und Bildspeicherung in Betracht komm wird durch die Software gegeben.

9. Regelkreis im spektralen Infrarotbereich, nach Anspruch 1, **dadurch gekennzeichnet dass** zur Suche des Brennpunktes (Bₛ) der monochromatischen Laseranregungsstrahlung eine Regelschleife verwendet wird, die in der Suche nach de maximal reflektierten Strahlung, Garantie der Erreichung des Brennpunktes (Bₛ) und der Speicherung des Ramanspektrums mit maximaler Auflösung, den Spektralbereich zwischen 780 nm und 1100 nm automatische abtastet und die Erfassung und Speicherung des Raman-Spektrums für die untersuchte feste oder halbfeste Materie (1) automatisch bei der Wellenlänge 1064 nm durchführt.

10. Vorrichtung zum Kalibrieren der Brennpunktverschiebungen mittels eines Michelson-Interferometers (J), **dadurch gekennzeichnet dass** zur genauen Quantifizierung der Bewegungsinkremente des Stellantriebes (6) für jede elektrische Speisungsspannungsstufe eine eimalige Kalibrierung durch den Produzenten des Objektivs (A) mit adaptiver Optik vorgenommen wird und zu diesem Zweck ein interferometrisches Michelson-Kalibriersystem gebildet aus einem Michelson-Interferometer (J), einem konkaven Metallspiegel (26), untergebracht in eine Kappe mit Innengewinde (25) des Objektivoberkörpers (4) verwendet wird, wobei der Objektivunterkörper (3) mit dem Kalibriervorrichtung durch eine mechanisches Verbindungselement (32) und einer Befestigungsschraube (31) gekoppelt wird.
